# FASCICULE DE BREVET EUROPEEN

(11) **EP 0 863 635 B1**
(45) Date de publication et mention de la délivrance du brevet: **23.02.2005**
(21) Numéro de dépôt: 98400487.9
(22) Date de dépôt: 02.03.1998
(51) Int. Cl.: H04L 7/10, H04J 3/06

(54) **Procédé et dispositif pour la transmission de trames de données**
Verfahren und Vorrichtung zur Übertragung von Datenrahmen
Method and device for transmitting data frames

(30) Priorité: 03.03.1997 FR 9702507
(43) Date de publication de la demande: 09.09.1998
(73) Titulaire: ALCATEL, 75008 Paris (FR)
(72) Inventeur: Dupuy, Pierre, 75017 Paris (FR)
(74) Mandataire: El Manouni, Josiane

(56) Documents cités:
- EP-A- 0 367 215
- EP-A- 0 426 894
- DE-A- 2 739 978
- US-A- 5 420 865
- PATENT ABSTRACTS OF JAPAN vol. 009, no. 288 (E-358), 15 novembre 1985 & JP 60 128752 A (AKAI DENKI KK), 9 juillet 1985,

## Description

La présente invention concerne les techniques de transmission de données, plus particulièrement les techniques de transmission de données selon lequelles les données transmises sont structurées en blocs appelés aussi trames, comportant des données utiles ainsi que des données dites ici auxiliaires destinées à permettre une synchronisation de trame d'un équipement récepteur sur un équipement émetteur.

De telles données auxiliaires comportent généralement un motif de synchronisation, appelé encore drapeau, ou fanion, formé d'une séquence prédéterminée de bits disposée habituellement en tête de trame.

Comme il est par ailleurs nécessaire de se prémunir contre les risques d'imitation du motif de synchronisation par les données utiles, de telles données auxiliaires comportent en outre habituellement, insérées parmi les données utiles, des bits de synchronisation destinés à éviter une telle imitation: par exemple, si le motif de synchronisation est une séquence de huit bits à 0, on insère des bits à 1 tous les sept bits.

On comprend cependant que l'insertion de telles données auxiliaires se fait au détriment de données utiles, ce qui soulève donc un problème d'efficacité de la trame, notamment lorsque, à débit constant, on souhaiterait pouvoir augmenter la charge utile transmise.

A cette fin, la présente invention a pour objet un procédé pour la transmission de trames de données, ces trames comportant d'une part des données dites utiles et d'autre part des données dites auxiliaires destinées à permettre une synchronisation de trame d'un équipement récepteur sur un équipement émetteur, ce procédé étant essentiellement caractérisé en ce que:
- il comporte deux modes de transmission possibles:
   -- un premier mode, utilisé à l'initialisation ou en cas de perte de synchronisation de trame d'un équipement récepteur appelé premier équipement récepteur, selon lequel un équipement émetteur appelé premier équipement émetteur émet à destination de ce premier équipement récepteur des trames comportant des données auxiliaires suffisantes pour permettre à ce premier équipement récepteur d'acquérir, de façon sûre, ladite synchronisation de trame, ces données auxiliaires incluant notamment un motif de synchronisation,
   -- un deuxième mode, utilisé en dehors de ces deux cas, selon lequel ledit premier équipement émetteur émet des trames comportant des données auxiliaires insuffisantes pour permettre audit premier équipement récepteur d'acquérir, de façon sûre, ladite synchronisation de trame, mais permettant, grâce en outre à une connaissance de ladite synchronisation de trame acquise préalablement, dans ledit premier mode, de déterminer une perte de synchronisation de trame,
- une perte de synchronisation de trame par ledit premier équipement récepteur est signalée audit premier équipement émetteur par passage d'un deuxième équipement émetteur, associé, dans un même équipement de transmission, audit premier équipement récepteur, dudit deuxième mode de transmission vers ledit premier mode de transmission, et détection de ce changement de mode de transmission par un deuxième équipement récepteur, associé, dans un même équipement de transmission, audit premier équipement émetteur, et,
- ledit deuxième équipement émetteur transmet, dans ledit deuxième mode , des trames dites modifiées ne comportant aucune séquence de données utiles imitant le motif de synchronisation du premier mode, dites aussi séquences interdites, celles-ci étant remplacées par des données dites de substitution destinées à permettre, en réception,de pouvoir réinsérer ces séquences interdites parmi les données utiles reçues.

Ainsi, en cas d'initialisation ou de perte de synchronisation, le premier mode de transmission est mis en oeuvre afin de permettre à l'équipement récepteur d'acquérir, de façon sûre, la synchronisation de trame, et en dehors de ces deux cas le deuxième mode de transmission est mis en oeuvre, permettant ainsi d'accroître la charge utile transportée, et dès qu'une perte de synchronisation est détectée dans ce deuxième mode, un retour au premier mode est réalisé. Un système utilisant deux modes de transmission est décrit dans US-A-5 420 865.

En outre, tout problème dû à un risque de fausse détection d'un tel passage du deuxième mode au premier mode, dû lui-même à un risque d'imitation du motif de synchronisation du premier mode par les données utiles transmises dans le deuxième mode, est évité grâce à la transmission, dans le deuxième mode, selon lesdites trames modifiées.

La présente invention a également pour objet un dispositif de transmission correspondant.

La présente invention a également pour objet une telle trame modifiée.

La présente invention est notamment applicable à des trames telles que les trames dites V110 permettant de transporter des données à des débits non sous-multiples de 64 kbit/s, telles que notamment celles obtenues pour les services de transmission de données offerts par le réseau GSM ("Global System for Mobile communications"), dans des canaux à 64 kbit/s.

D'autres objets et caractéristiques de la présente invention apparaîtront à la lecture de la description suivante d'exemples de réalisation, faite en relation avec les dessins ci-annexés dans lesquels:
- la figure 1 est un diagramme destiné à illustrer un exemple de trame transmise suivant ledit premier mode,
- la figure 2 est un diagramme destiné à illustrer un premier exemple de trame transmise suivant ledit deuxième mode,
- la figure 3 est un diagramme destiné à illustrer un deuxième exemple de trame transmise suivant ledit deuxième mode,
- la figure 4 est un schéma synoptique destiné à faire comprendre, pour simplifier dans le cas d'une liaison unidirectionnelle, le principe d'une transmission utilisant lesdits premier et deuxième modes de transmission,
- la figure 5 est un schéma synoptique destiné à illustrer un dispositif de transmission utilisant, dans le cas d'une liaison bidirectionnelle, lesdits premier et deuxième modes de transmission,
- la figure 6 est un diagramme destiné à illustrer un exemple de séquence de données utiles à transmettre, afin d'expliquer le principe de formation desdites trames modifiées,
- les figures 7, 8, et 9 sont des diagrammes destinés à illustrer respectivement un premier, un deuxième et un troisième exemple de trame modifiée, permettant la transmission d'une telle séquence de données utiles,
- la figure 10 est un diagramme destiné à illustrer un exemple de contenu de séquences dites de substitution transmises dans une telle trame modifiée,
- la figure 11 est un diagramme destiné à illustrer un procédé d'élaboration de trames modifiées suivant ledit premier exemple ou suivant ledit deuxième exemple, à partir d'un train incident de données utiles,
- la figure 12 est un diagramme destiné à illustrer un procédé d'élaboration de trames modifiées suivant ledit troisième exemple, à partir d'un train incident de données utiles,
- la figure 13 est un diagramme destiné à illustrer un procédé d'extraction de données utiles, à partir de trames modifiées reçues suivant ledit premier exemple,
- la figure 14 est un diagramme destiné à illustrer un procédé d'extraction d'un train de données utiles, à partir de trames modifiées reçues suivant ledit deuxième exemple ou suivant ledit troisième exemple.

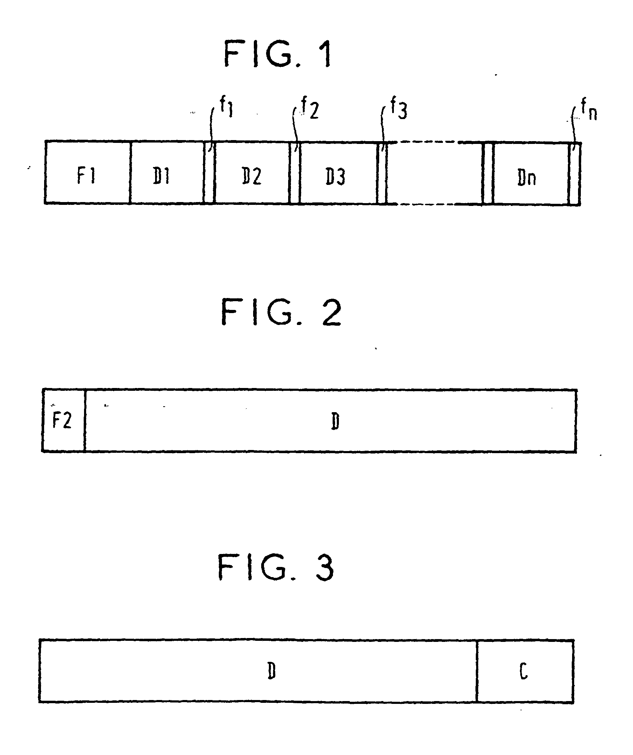

Dans l'exemple de trame transmise suivant ledit premier mode, illustré sur la figure 1, lesdites données auxiliaires comportent un motif de synchronisation appelé premier motif de synchronisation, noté F1, formé d'une séquence prédéterminée de bits placée en l'occurrence en tête de la trame, ainsi que des bits de synchronisation notés f1, f2, ...fn, insérés parmi les données utiles, notées D1, D2, ...Dn, et destinés à éviter une imitation de ce motif de synchronisation par ces données utiles.

Dans l'exemple de trame transmise suivant ledit deuxième mode, illustré sur la figure 2, lesdites données auxiliaires ne comportent qu'un motif de synchronisation appelé deuxième motif de synchronisation, noté F2, de longueur différente (notamment inférieure) à celle du premier motif de synchronisation F1.

Dans l'exemple de trame transmise suivant ledit deuxième mode, illustré sur la figure 3, lesdites données auxiliaires ne comportent que des données, notées C, de codage correcteur d'erreurs obtenues en appliquant un code correcteur d'erreurs du type code en bloc aux données utiles destinées à être transmises à l'intérieur d'un même bloc, ou trame.

On notera que dans ce dernier exemple lesdites données auxiliaires permettent ainsi d'obtenir en outre une protection contre les erreurs de transmission des données utiles ainsi transmises.

D'autres exemples de trames que ceux illustrés sur les figures 1 à 3 sont bien entendu possibles; en outre, des trames transmises suivant ledit deuxième mode peuvent être obtenues en utilisant, comme données auxiliaires, à la fois un motif de synchronisation et des données de codage correcteur d'erreurs, éventuellement de longueur inférieure à ceux utilisés respectivement dans les exemples de réalisation illustrés sur les figures 2 et 3.

On comprend, dans ces différents exemples, que les données auxiliaires des trames transmises suivant ledit premier mode permettent à l'équipement récepteur d'acquérir de façon sûre la synchronisation de trame, alors que les données auxiliaires des trames transmises suivant ledit deuxième mode sont insuffisantes pour permettre à l'équipement récepteur d'acquérir de façon sûre une telle synchronisation. Cependant, grâce en outre à une connaissance de ladite synchronisation de trame acquise préalablement, dans ledit premier mode, elles permettent de détecter une perte de synchronisation de trame.

En outre, pour accélérer le retour à la synchronisation de trame de l'équipement récepteur en cas de perte de cette synchronisation, les trames transmises suivant ledit premier mode pourront comporter, au lieu de données utiles, des bits de valeur égale à celle des bits de synchronisation.

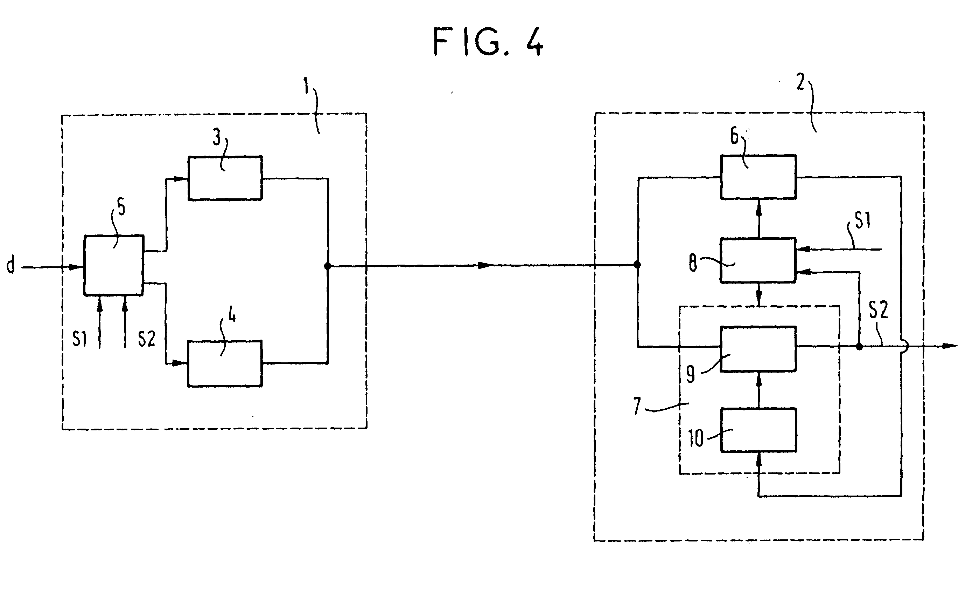

Le dispositif illustré sur la figure 4 est utilisé pour transmettre des trames de données entre un équipement émetteur 1 et un équipement récepteur 2.

L'équipement émetteur 1 comporte des moyens 3 pour émettre des trames suivant ledit premier mode, des moyens 4 pour émettre des trames suivant ledit deuxième mode, et des moyens 5 dits de sélection de mode en émission pour sélectionner, suivant le cas, l'un ou l'autre de ces moyens 3 ou 4, en l'occurrence pour appliquer des données utiles incidentes "d", suivant le cas à l'un ou l'autre de ces moyens.

L'équipement récepteur 2 comporte, outre des moyens classiques et non mentionnés ici car ne se rapportant pas directement à l'invention, pour restituer les données utiles transmises, des moyens 6 de détection de synchronisation de trame de premier mode, des moyens 7 de détection de perte de synchronisation de trame de deuxième mode, et des moyens 8 dits de sélection de mode en réception pour sélectionner, suivant le cas, l'un ou l'autre de ces moyens.

Les moyens 6 de détection de synchronisation de trame de premier mode opèrent, suivant des techniques connues, en observant les données reçues à travers une fenêtre glissante et en recherchant, pour chaque position de cette fenêtre glissante, si le motif de synchronisation F1 est ou non retrouvé.

Les moyens 7 de détection de perte de synchronisation de trame de deuxième mode comportent des moyens dits simplifiés de détection de synchronisation de trame, 9, activés par une horloge-trame 10 elle-même calée sur une position fonction d'une connaissance préalablement acquise de ladite synchronisation de trame, cette connaissance préalable étant en l'occurrence fournie par les moyens 6 de détection de synchronisation de trame de premier mode. Ces moyens simplifiés de détection de synchronisation de trame 9 sont dits simplifiés au sens où, contrairement aux moyens de détection de synchronisation de trame 6, ils n'observent pas les données reçues à travers une fenêtre glissante mais à travers une fenêtre unique, dont la position est donc déterminée grâce à ladite connaissance préalablement acquise de la synchronisation de trame.

A titre d'exemple, dans le cas du deuxième mode de transmission illustré sur la figure 2, ces moyens simplifiés 9 de détection de synchronisation comportent des moyens pour déterminer dans quelle mesure la séquence de données sélectionnée au moyen de ladite fenêtre unique correspond au motif de synchronisation F2.

Dans le cas du deuxième mode de transmission illustré sur la figure 3, ces moyens simplifiés 9 de détection de synchronisation comportent des moyens pour déterminer dans quelle mesure les données obtenues en appliquant le même code en bloc qu'à l'émission, aux données utiles formant une trame reçue ainsi délimitée grâce à la position de ladite fenêtre d'observation, correspondent aux données de codage correcteur d'erreurs élaborées à l'émission.

Les moyens 5 de sélection de mode en émission illustrés sur la figure 4 reçoivent un signal S1 apte à indiquer une initialisation de la procédure de transmission, et un signal S2 apte à indiquer une perte de synchronisation de trame de l'équipement récepteur. Ces moyens de sélection 5 sélectionnent les moyens 3 pour émettre des trames suivant ledit premier mode lorsque le signal S1 indique effectivement une initialisation, ou lorsque le signal S2 indique effectivement une perte de synchronisation de trame de l'équipement récepteur, ou les moyens 4 pour émettre des trames suivant ledit deuxième mode en dehors de ces deux cas.

Les moyens 8 de sélection de mode en réception reçoivent le signal S1 apte à indiquer une initialisation de la procédure de transmission, et le signal S2 apte à indiquer une détection de perte de synchronisation, ce dernier étant en l'occurrence issu directement des moyens 7 de détection de perte de synchronisation de trame de deuxième mode. Ces moyens de sélection 8 sélectionnent les moyens 6 de détection de synchronisation de trame de premier mode lorsque le signal S1 indique effectivement une initialisation, ou lorsque le signal S2 indique effectivement une perte de synchronisation, ou les moyens 7 de détection de perte de synchronisation en dehors de ces deux cas.

Ainsi, en cas d'initialisation ou de perte de synchronisation, le premier mode de transmission est mis en oeuvre afin de permettre à l'équipement récepteur d'acquérir, de façon sûre, la synchronisation de trame, et en dehors de ces deux cas le deuxième mode de transmission est mis en oeuvre, permettant ainsi d'accroître la charge utile transportée, et dès qu'une perte de synchronisation est détectée dans ce deuxième mode, un retour au premier mode est réalisé.

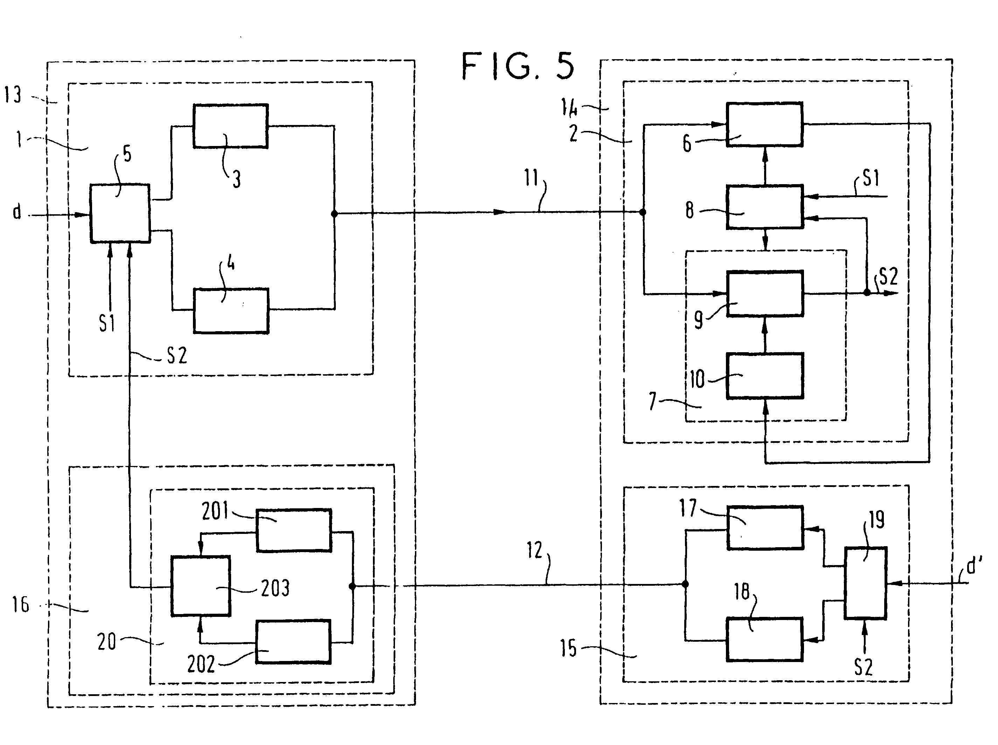

Le schéma de la figure 5 permet d'illustrer le mode d'acheminement de l'information de perte de synchronisation portée par le signal S2, de l'équipement récepteur jusqu'à l'équipement émetteur, dans le cas d'une transmission bidirectionnelle, schématisée sous la forme de deux liaisons unidirectionnelles 11 et 12. Pour simplifier, les éléments communs à la figure 4 et à la figure 5 portent les mêmes références. La liaison 11 relie, comme la liaison de la figure 4, un équipement émetteur 1, dit ici premier équipement émetteur, d'un équipement de transmission 13, à un équipement récepteur 2, dit ici premier équipement récepteur, d'un équipement de transmission 14. De même la liaison 12 relie un équipement émetteur 15, dit deuxième équipement émetteur, de l'équipement de transmission 14, à un équipement récepteur 16, dit deuxième équipement récepteur, de l'équipement de transmission 13.

Pour assurer l'achemininement de l'information de perte de synchronisation portée par le signal S2, de l'équipement récepteur 2 jusqu'à l'équipement émetteur 1, le deuxième équipement émetteur 15 comporte de même des moyens 17 pour émettre des trames suivant ledit premier mode, des moyens 18 pour émettre des trames suivant ledit deuxième mode, et des moyens 19 de sélection de mode en émission pour sélectionner, suivant le cas, l'un ou l'autre de ces moyens, en l'occurrence pour appliquer des données utiles incidentes "d'", suivant le cas à l'un ou l'autre de ces moyens.

Le deuxième équipement récepteur 16 comporte, outre des moyens non illustrés spécifiquement, pour restituer les données utiles transmises, des moyens 20 de détection de changement de mode de transmission des trames émises par l'équipement émetteur 15, du deuxième mode vers le premier mode.

Le signal S2 appliqué à l'équipement émetteur 1 est issu des moyens 20 de détection de changement de mode de transmission des trames émises par l'équipement émetteur 15, les moyens 17 d'émission de trames suivant ledit premier mode étant en effet sélectionnés dans cet équipement émetteur 15 lorsque le signal S2 issu de l'équipement récepteur 2 indique effectivement une détection de perte de synchronisation.

Ces moyens 20 de détection de changement de mode de transmission comportent, opérant en parallèle:
- des moyens 201 de détection de synchronisation de trame de premier mode opérant, suivant des techniques connues, en observant les données reçues à travers une fenêtre glissante et en recherchant, pour chaque position de cette fenêtre glissante, si le motif de synchronisation du premier mode est ou non retrouvé,
- des moyens 202 de détection de perte de synchronisation de trame de deuxième mode, qui peuvent eux-mêmes comporter, comme les moyens 7, des moyens dits simplifiés de détection de synchronisation de trame, activés par une horloge-trame elle-même calée sur une position fonction d'une connaissance préalablement acquise, dans le premier mode, de ladite synchronisation de trame.

Ainsi, lorsque l'une ou l'autre des deux conditions: perte de synchronisation dans le deuxième mode (détectée par les moyens 202), ou reprise de synchronisation dans le premier mode (détectée par les moyens 201), est réalisée, ce qui est indiqué par des moyens 203, une détection de changement de mode est réalisée par ces moyens 20.

On notera que même si , pour simplifier, on n'a fait ressortir, dans la description qui précède, que les éléments nécessaires à la transmission des données "d" de l'équipement de transmission 13 vers l'équipement de transmission 14, le principe de transmission est bien entendu symétrique et s'applique aussi bien pour la transmission des données "d"' de l'équipement de transmission 14 vers l'équipement de transmission 13.

Par ailleurs, tout problème dû à un risque de fausse détection d'un tel passage du deuxième mode au premier mode, dû lui-même à un risque d'imitation du motif de synchronisation du premier mode par les données utiles transmises dans le deuxième mode est évité, comme expliqué maintenant en relation avec les figures suivantes, dans lesquelles les trames considérées sont donc, même si cela n'est pas précisé, des trames selon le deuxième mode.

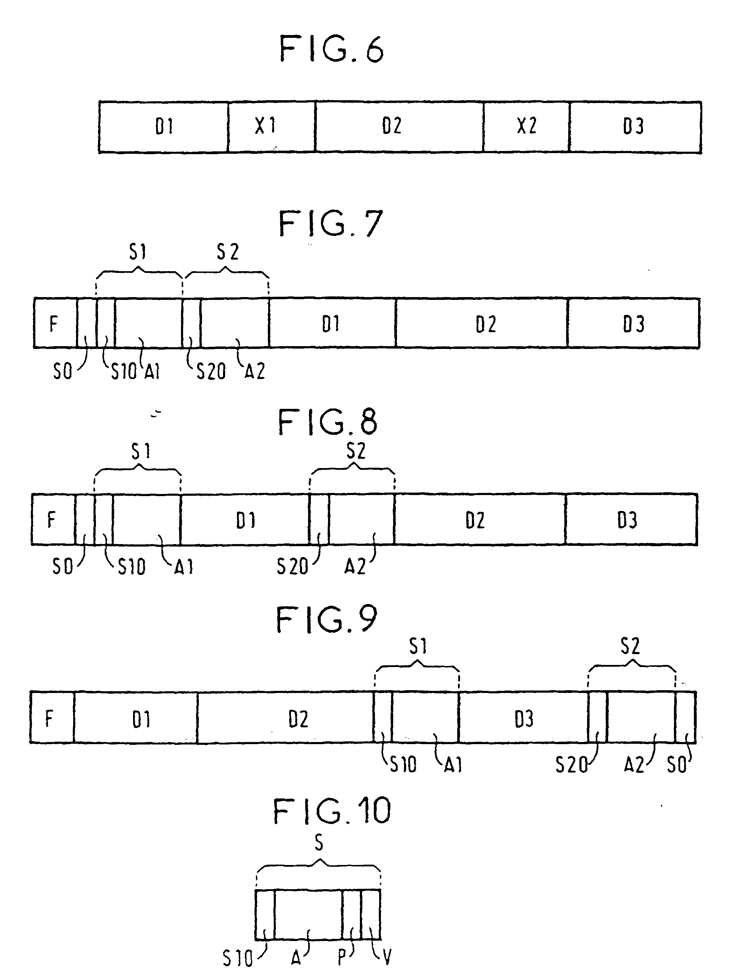

Comme illustré sur la figure 6, une séquence de données utiles à transmettre pouvant toujours se décomposer en séquences, dites ici séquences autorisées, ne contenant pas elles-mêmes de séquence imitant le motif de synchronisation, et en séquences, dites ici séquences interdites, imitant le motif de synchronisation, on a illustré sur la figure 6 une telle séquence de données utiles se décomposant à titre d'exemple en trois séquences autorisées notées D1, D2, D3, et en deux séquences interdites notées X1, X2, ladite séquence de données utiles comportant en l'occurrence, dans l'ordre, les séquences D1 X1 D2 X2 D3.

La trame modifiée suivant l'invention, permettant, comme illustré sur les figures 7 à 9, de transmettre une telle séquence de données utiles, ne comporte donc aucune séquence interdite telle que X1 ou X2, mais comporte au contraire des données dites de substitution, destinées à permettre, en réception, de pouvoir réinsérer ces séquences interdites parmi les données utiles reçues.

Ces données de substitution comportent elles-mêmes avantageusement deux types de données:
- des données dites ici d'exploitation, permettant à un équipement récepteur de telles trames modifiées de déterminer dans quelle mesure la séquence de données utiles transmise diffère de la séquence de données utiles à transmettre, c'est-à-dire dans quelle mesure des séquences interdites sont présentes dans la séquence de données utiles à transmettre,
- des données dites ici d'adresse, permettant à un équipement récepteur de telles trames modifiées de déterminer plus précisément le ou les emplacements où une séquence interdite doit être insérée parmi les données utiles reçues.

Dans l'exemple illustré, lesdites données d'adresse, notées A1 et A2, sont contenues dans des séquences dites de substitution, notées S1 et S2, qui se substituent respectivement aux séquences interdites X1 et X2 ( dites aussi séquences substituées). La séquence de substitution S1 contient ainsi une adresse A1 permettant, dans l'exemple illustré, à un équipement récepteur de telles trames modifiées d'insérer la séquence interdite X1 entre les séquences reçues correspondant aux séquences autorisées (ou séquences non substituées) D1 et D2, et la séquence de substitution S2 contient ainsi une adresse A2 permettant à un tel équipement récepteur d'insérer la séquence interdite X2 entre les séquences reçues correspondant aux séquences autorisées ( ou non substituées) D2 et D3.

A titre d'exemple lesdites données d'exploitation peuvent comporter:
- des premières données d'exploitation, telles que celles notées S0 sur les figures 7 à 9, transmises à un emplacement déterminé après le motif de synchronisation considéré, soit F2, (par exemple immédiatement après ce motif de synchronisation) , et indiquant si la séquence de données utiles transmise diffère ou non de la séquence de données utiles à transmettre, c'est-à-dire si la séquence de données utiles transmise contient ou non des séquences substituées,
- des deuxièmes données d'exploitation, telles que celles notées S10 et S20 sur les figures 7 à 9, transmises avantageusement dans lesdites séquences de substitution telles que S1 et S2, et indiquant si chacune de ces séquences de substitution est ou non la dernière de la trame transmise.

Suivant un autre exemple, non illustré spécifiquement, lesdites données d'exploitation pourraient aussi comporter le nombre, éventuellement nul, de séquences substituées contenues dans la séquence de données utiles transmise.

La figure 10 est un diagramme destiné à illustrer un exemple de contenu de séquence de substitution.

Dans cet exemple une séquence de substitution, notée de manière générale S, comporte:
- lesdites deuxièmes données d'exploitation telles que S10 par exemple, constituées par exemple par un bit à 1 ou à 0 suivant que la séquence de substitution considérée est ou non la dernière de la trame transmise,
- des données d'adresse, telles que A1 ou A2, constituées par exemple par un nombre binaire à "n" bits indiquant le rang d'un bit dans une séquence de 2ⁿ bits utiles à transmettre,
- des données, notées P, de protection de cette séquence de substitution contre les erreurs de transmission (ces données de protection étant par exemple constituées par un bit de parité),
- des données dites de verrouillage, notées V, destinées à éviter qu'une séquence interdite soit reproduite par introduction d'une séquence de substitution dans la trame transmise (ces données de verrouillage étant par exemple constituées par un bit à 1 dans l'exemple considéré de séquence interdite formée uniquement de bits à 0).

Dans l'exemple illustré sur la figure 7, l'ensemble formé par les données d'exploitation et les données d'adresse ( c'est-à-dire l'ensemble formé par les premières données d'exploitation S0 et les séquences de substitution telles que S1, S2 incluant elles-mêmes des deuxièmes données d'exploitation telles que S10 et S20 et des données d'adresse telles que A1 et A2) est transmis avant l'ensemble des données utiles.

Cet exemple convient ainsi plus particulièrement au cas où le délai au bout duquel les bits utiles sont extraits d'une telle trame en réception peut ne pas être fixe, ce délai étant en effet dans cet exemple essentiellement variable et fonction du nombre de séquences de substitution présentes dans la trame, ce qui peut être inacceptable dans certaines applications telles que par exemple l'application précitée à la transmission au sein des infrastructures d'un réseau de radiocommunication avec des mobiles tel que notamment le réseau GSM.

Ceci est évité dans l'exemple illustré sur la figure 8.

Plus précisément, dans cet exemple, la première séquence de substitution S1 est transmise à un emplacement déterminé après les premières données d'exploitation S0, elles-mêmes transmises à un emplacement déterminé après le motif de synchronisation F2 (par exemple la première séquence de substitution S1 est transmise immédiatement après les premières données d'exploitation S0, elles-mêmes transmises immédiatement après le motif de synchronisation F2), et la deuxième séquence de substitution S2 est transmise à la place de la première séquence substituée X1 (ou plus généralement la n ième séquence de substitution serait transmise à la place de la n-1 ième séquence substituée).

Les exemples illustrés sur les figures 7 et 8 conviennent en outre plus particulièrement au cas où aucune contrainte n'existe sur le délai au bout duquel de telles trames peuvent ainsi être élaborées à partir d'un train de données utiles incident, ce délai étant en effet dans ces exemples égal au temps d'analyse total d'une séquence de données utiles incidente, nécessaire pour permettre d'obtenir lesdites données d'exploitation, ce qui peut être prohibitif dans certaines applications telles que notamment l'application précitée à la transmission de données au sein des infrastructures d'un réseau de radiocommunication avec des mobiles tel que notamment le réseau GSM.

L'exemple illustré sur la figure 9 permet au contraire de satisfaire à une telle contrainte. Dans cet exemple, lesdites données d'exploitation se présentent de façon inversée par rapport au cas illustré sur les figures 7 et 8, en ce sens que:
- les premières données d'exploitation telles que S0 indiquant si la séquence de données utiles transmise diffère ou non de la séquence de données utiles à transmettre sont insérées non pas après le motif de synchronisation de la trame considérée, mais en fin de trame, c'est-à-dire avant le motif de synchronisation de la trame suivante,
- les deuxièmes données d'exploitation telles que S10 et S20 n'indiquent plus si la séquence de substitution correspondante telle que S1 et S2 est ou non la dernière à partir du début de la trame, mais si elle est ou non la dernière à partir de la fin de la trame.

Il est à noter qu'une telle trame ne peut alors être exploitée en réception avant de l'avoir reçue en totalité, mais que ceci n'introduit pas de retard notable, contrairement audit temps d'analyse qui aurait été nécessaire en émission.

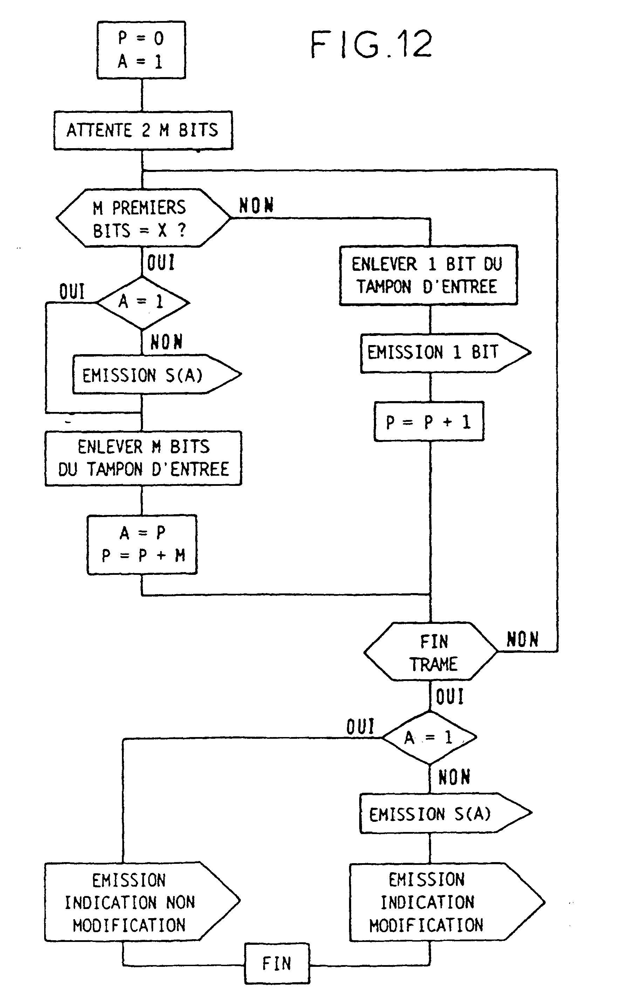

Un début d'analyse de ladite séquence de données utiles à transmettre reste en outre nécessaire avant de pouvoir élaborer une trame correspondante, d'où un léger retard à l'émission de telles trames, comme cela apparaîtra sur la figure 12.

En outre, dans l'exemple illustré, la deuxième (c'est-à-dire ici la dernière) séquence de substitution S2 est transmise à un emplacement déterminé avant les premières données d'exploitation S0, elles-mêmes tranmises à un emplacement déterminé avant le motif de synchronisation de la trame suivante (par exemple la dernière séquence de substitution est transmise immédiatement avant les premières données d'exploitation S0, elles-mêmes transmises immédiatement avant le motif de synchronisation F2 de la trame suivante), et la première séquence de substitution S1 est transmise à la place de la deuxième (c'est-à-dire ici la dernière) séquence substituée X2 (ou plus généralement la n-1 ième séquence de substitution serait transmise à la place de la n ième séquence substituée).

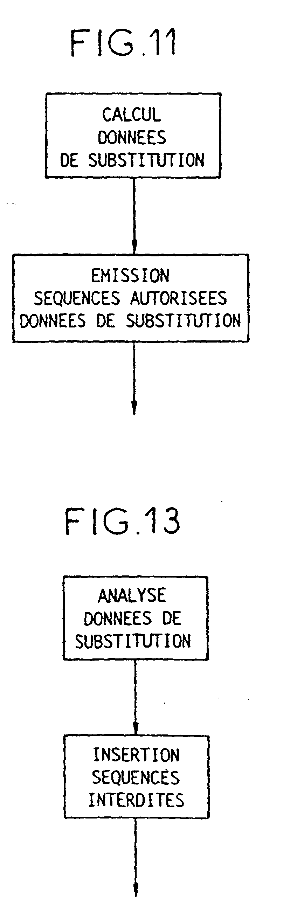

La figure 11 est un diagramme destiné à illustrer un procédé d'élaboration de telles trames dites modifiées, valable aussi bien pour l'exemple de la figure 7 que pour l'exemple de la figure 8.

Ce procédé comporte les étapes de:
- calcul de données de substitution, à partir de données utiles incidentes,
- émission de données de substitution ainsi calculées, et de séquences autorisées, dans l'ordre souhaité.

La figure 12 est un algorithme destiné à illustrer un procédé d'élaboration de telles trames modifiées, suivant l'exemple illustré sur la figure 9, à partir d'un train incident de données utiles.

Ce procédé comporte, pour l'élaboration de la charge utile de chaque trame à émettre, les étapes suivantes:
- initialiser à une valeur égale à zéro une variable P correspondant à une adresse courante,
- initialiser une variable notée A à une valeur correspondant à une valeur d'adresse impossible, par exemple égale à -1,
- attendre la réception de 2M bits du train incident (où M désigne le nombre de bits du motif de synchronisation) dans un registre-tampon d'entrée,
- détecter si les M premiers bits reçus stockés dans le registre-tampon d'entrée correspondent à une séquence interdite notée X:
   -- dans le cas de détection de séquence interdite:
      --- si la variable A est égale à ladite valeur impossible :
         ---- enlever lesdits M premiers bits reçus du registre-tampon d'entrée,
         ---- réinitialiser la variable A à la valeur de la variable P,
         ---- incrémenter la variable P d'une valeur égale à M,
         ---- détecter si l'adresse courante correspond à une fin de trame:
            ----- dans le cas de détection de fin de trame:
               ------ si A n'est pas égal à ladite valeur impossible :émettre la séquence de substitution S(A) correspondant à une séquence interdite à insérer, en réception, à l'adresse A, puis émettre des premières données d'exploitation S0 indiquant une présence de séquence(s) de substitution dans la trame (ce qui a été indiqué par "émission indication modification"), et retourner au début de l'algorithme,
               ------ si A est égal à ladite valeur impossible, émettre des premières données d'exploitation S0 indiquant une absence de séquence(s) de substitution dans la trame (ce qui a été indiqué par "émission indication non modification"), puis retourner au début de l'algorithme,
            ----- dans le cas de non détection de fin de trame:
               ------ retourner à l'étape de détection de séquence interdite,
      --- si A n'est pas égal à ladite valeur impossible : émettre la séquence de substitution S(A),
   -- dans le cas de non détection de séquence interdite:
      --- enlever le premier bit reçu du registre tampon,
      --- émettre ce bit,
      --- incrémenter la variable P de 1,
      --- retourner à l'étape de détection de fin de trame.

Un procédé d'élaboration de trames suivant l'une ou l'autre des figures 11 ou 12 est ainsi mis en oeuvre, sur le schéma de la figure 5, dans les moyens 18 d'émission de trames suivant ledit deuxième mode.

La présente invention a également pour objet un dispositif d'émission de telles trames modifiées, ce dispositif comportant des moyens pour mettre en oeuvre les différentes étapes des procédés d'émission ainsi décrits.

La réalisation de tels moyens ne présentant pas de difficulté particulière pour l'homme du métier, ceux-ci ne seront pas décrits de manière autrement plus détaillée que par leur fonction. D'une manière générale, un tel dispositif comporte:
- des moyens de calcul de données de substitution à partir de données utiles incidentes,
- des moyens d'émission de données utiles ne comportant aucune séquence interdite, et de données de substitution ainsi calculées, pour formation de ladite trame.

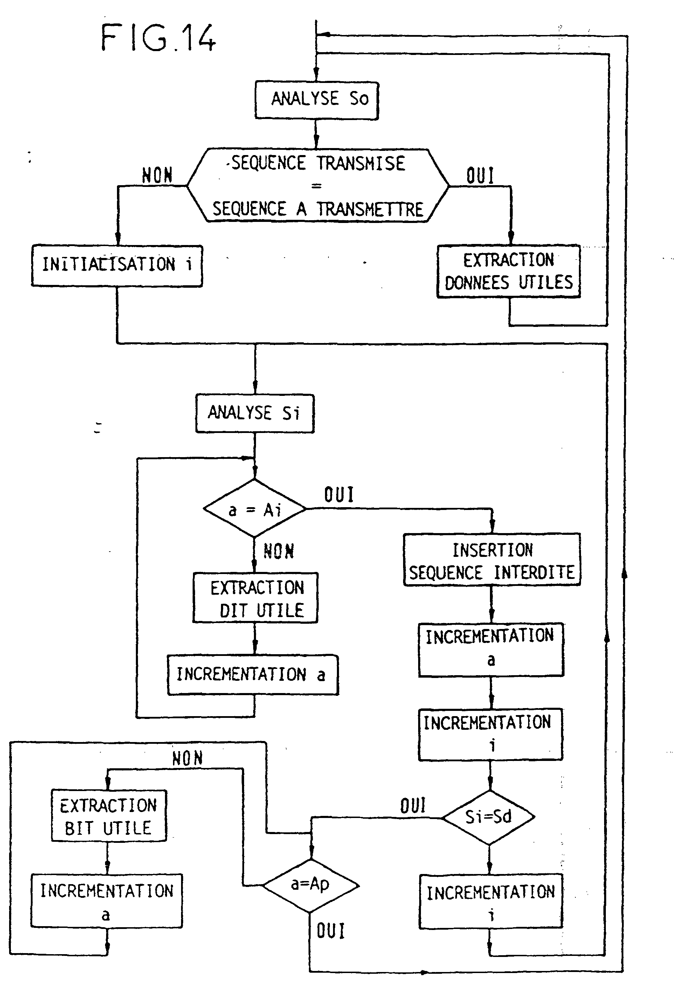

La figure 13 est un diagramme destiné à illustrer un procédé d'extraction de données utiles à partir de trames reçues suivant l'exemple de la figure 7.

Ce procédé comporte les étapes de:
- analyse de données de substitution,
- insertion de séquences interdites, parmi les données utiles reçues, de la façon déterminée par analyse desdites données de substitution.

La figure 14 est un diagramme destiné à illustrer un procédé d'extraction d'un train de données utiles, à partir de trames reçues, valable aussi bien pour l'exemple illustré sur la figure 8 que, avec les aménagements qui seront indiqués, pour l'exemple illustré sur la figure 9.

Ce procédé comporte, à chaque détection d'un motif de synchronisation, les étapes suivantes:
- initialisation d'une variable "a" correspondant à une adresse courante,
- analyse des premières données d'exploitation S0 suivant le motif de synchronisation détecté et indiquant si la séquence de données utiles transmise diffère ou non de la séquence de données utiles à transmettre:
   -- si la séquence de données utiles transmise ne diffère pas de la séquence de données utiles à transmettre, extraction desdites données utiles transmises, pour formation du train de données utiles sortant,
   -- si la séquence de données utiles transmise diffère de la séquence de données utiles à transmettre:
      --- analyse de la première séquence de substitution S1 suivant les premières données d'exploitation S0, pour déterminer l'adresse A1 où insérer la première séquence interdite, c'est-à-dire aussi en l'occurrence l'adresse de la deuxième séquence de substitution S2, et pour déterminer, d'après les données d'exploitation S10 contenues dans cette séquence de substitution S1, si cette séquence de substitution est ou non la dernière de la trame,
      --- comparaison de l'adresse courante "a" et de l'adresse A1:
         ---- tant que "a" est inférieur à A1, extraction du bit de données utiles situé à l'adresse courante, pour formation dudit train de données utiles sortant, puis incrémentation correspondante de l'adresse courante "a" et retour à l'étape de comparaison de l'adresse courante "a" et de l'adresse A1,
         ---- si "a" est égal à A1, insertion d'une séquence interdite pour formation dudit train de données utiles sortant, puis incrémentation correspondante de l'adresse courante "a",
      --- parallèlement, si la séquence de substitution S1 n'est pas la dernière de la trame, analyse de la deuxième séquence de substitution S2 située à l'adresse A1, pour déterminer l'adresse A2 où insérer la deuxième séquence interdite (c'est-à-dire aussi l'adresse d'une éventuelle séquence de substitution S3) et pour déterminer, d'après les données d'exploitation S20 contenues dans cette séquence de substitution S2, si cette séquence de substitution est ou non la dernière de la trame,
         ---- tant que "a" est inférieur à A2, extraction du bit de données utiles situé à l'adresse courante, pour formation dudit train de données utiles sortant, puis incrémentation correspondante de l'adresse courante "a" et retour à l'étape de comparaison de l'adresse courante "a" et de l'adresse A2,
         ---- si "a" est égal à A2, insertion d'une séquence interdite pour formation dudit train de données utiles sortant, puis incrémentation correspondante de l'adresse courante "a",
      --- et ainsi de suite, jusqu'à la dernière séquence, notée Sd, de la trame reçue, ce qui a été symbolisé sur la figure 9 par une boucle dans laquelle on fait varier un indice i, jusqu'à ce que Si devienne égal à Sd, auquel cas:
         ---- tant que "a" est inférieur à l'adresse Ap du dernier bit de charge utile de la trame incidente, extraction du bit de données utiles situé à l'adresse courante, pour formation dudit train de données utiles sortant, puis incrémentation correspondante de l'adresse courante,
         ---- si "a" est égal à Ap, retour au début de l'algorithme.

Le même procédé reste valable pour des trames reçues suivant l'exemple illustré sur la figure 9, à condition de considérer que le motif de synchronisation à détecter est celui de la trame suivante, et à condition d'inverser l'ordre d'analyse des séquences de substitution, suivant ce qui a été expliqué en relation avec la figure 9.

Un procédé d'extraction de données utiles, suivant l'une ou l'autre des figures 13 ou 14 est ainsi mis en oeuvre sur le schéma de la figure 5, pour réaliser une extraction de données utiles dans le deuxième équipement récepteur 16.

La présente invention a également pour objet un dispositif de réception de telles trames modifiées, ce dispositif comportant des moyens pour mettre en oeuvre les différentes étapes des procédés de réception ainsi décrits.

La réalisation de tels moyens ne présentant pas de difficulté particulière pour l'homme du métier, ceux-ci ne seront pas décrits de manière autrement plus détaillée que par leur fonction. D'une manière générale, un tel dispositif comporte:
- des moyens d'analyse de données de substitution de trames incidentes,
- des moyens d'insertion de séquences interdites, parmi les données utiles extraites desdites trames incidentes, aux emplacements obtenus par analyse desdites données de substitution, de manière à former ledit train de données utiles sortant.

## Revendications

1. Procédé pour la transmission de trames de données, ces trames comportant d'une part des données dites utiles et d'autre part des données dites auxiliaires destinées à permettre une synchronisation de trame d'un équipement récepteur sur un équipement émetteur, ce procédé étant **caractérisé en ce que**:
- il comporte deux modes de transmission possibles:
-- un premier mode, utilisé à l'initialisation ou en cas de perte de synchronisation de trame d'un équipement récepteur (2) appelé premier équipement récepteur, selon lequel un équipement émetteur (1) appelé premier équipement émetteur émet à destination de ce premier équipement récepteur des trames comportant des données auxiliaires suffisantes pour permettre à ce premier équipement récepteur d'acquérir, de façon sûre, ladite synchronisation de trame, ces données auxiliaires incluant notamment un motif de synchronisation,
-- un deuxième mode, utilisé en dehors de ces deux cas, selon lequel ledit premier équipement émetteur émet des trames comportant des données auxiliaires insuffisantes pour permettre audit premier équipement récepteur d'acquérir, de façon sûre, ladite synchronisation de trame, mais permettant, grâce en outre à une connaissance de ladite synchronisation de trame acquise préalablement, dans ledit premier mode, de déterminer une perte de synchronisation de trame.

2. Procédé selon la revendication 1, dans lequel :
- une perte de synchronisation de trame par ledit premier équipement récepteur est signalée audit premier équipement émetteur par passage d'un deuxième équipement émetteur (15), associé, dans un même équipement de transmission (14), audit premier équipement récepteur (2), dudit deuxième mode de transmission vers ledit premier mode de transmission, et détection de ce changement de mode de mode de transmission par un deuxième équipement récepteur (16), associé, dans un même équipement de transmission (13), audit premier équipement émetteur (1).

3. Procédé selon la revendication 2, dans lequel :
- ledit deuxième équipement émetteur transmet, dans ledit deuxième mode , des trames dites modifiées ne comportant aucune séquence de données utiles imitant le motif de synchronisation (F1) du premier mode, dites aussi séquences interdites (X1, X2), celles-ci étant remplacées par des données dites de substitution (S0, S1, S2) destinées à permettre, en réception,de pouvoir réinsérer ces séquences interdites parmi les données utiles reçues.

4. Procédé selon l'une des revendications 1 à 3, **caractérisé en ce que** les données auxiliaires des trames transmises dans ledit premier mode comportent un motif de synchronisation (F1), ainsi que des bits de synchronisation (f1, f2, ...fn) insérés parmi les données utiles à transmettre et destinés à éviter une imitation de ce motif de synchronisation parmi ces données utiles.

5. Procédé selon l'une des revendications 1 à 3, **caractérisé en ce que** les données auxiliaires des trames transmises dans ledit deuxième mode ne comportent qu'un motif de synchronisation (F2), de longueur différente du motif de synchronisation des trames transmises dans le premier mode.

6. Procédé selon l'une des revendications 1 à 3, **caractérisé en ce que** les données auxiliaires des trames transmises dans ledit deuxième mode ne comportent que des données de codage correcteur d'erreurs (C)obtenues en appliquant un code correcteur d'erreurs du type code en bloc aux données utiles à transmettre dans ces trames.

7. Procédé selon l'une des revendications 3 à 6, **caractérisé en ce qu'**il comporte, pour l'élaboration de trames modifiées à partir d'un train incident de données utiles, des étapes de:
- calcul de données de substitution à partir de données utiles incidentes,
- émission de données utiles ne comportant aucune séquence interdite, et de données de substitution ainsi calculées, pour formation desdites trames.

8. Procédé selon la revendication 7, **caractérisé en ce que** ledit calcul de données de substitution nécessite une analyse desdites données utiles incidentes sur une longueur suffisante pour permettre de calculer toutes les données de substitution d'une trame avant émission du premier bit utile de cette trame.

9. Procédé selon la revendication 7, **caractérisé en ce que** ledit calcul de données de substitution nécessite une analyse desdites données utiles incidentes sur une longueur inférieure à celle nécessaire pour permettre de calculer toutes les données de substitution d'une trame avant émission du premier bit utile de cette trame.

10. Dispositif pour la transmission de trames de données, ces trames comportant des données utiles et des données auxiliaires destinées à permettre une synchronisation de trame d'un équipement récepteur sur un équipement émetteur, et ce dispositif étant **caractérisé en ce qu'**il comporte :
- des moyens pour réaliser une transmission dans un premier mode, utilisé à l'initialisation ou en cas de perte de synchronisation de trame d'un équipement récepteur (2) appelé premier équipement récepteur, selon lequel un équipement émetteur (1) appelé premier équipement émetteur émet à destination de ce premier équipement récepteur des trames comportant des données auxiliaires suffisantes pour permettre à ce premier équipement récepteur (2) d'acquérir, de façon sûre, ladite synchronisation de trame,
- des moyens pour réaliser une transmission dans un deuxième mode, utilisé en dehors de ces deux cas, selon lequel ledit premier équipement émetteur émet des trames comportant des données auxiliaires insuffisantes pour permettre audit premier équipement récepteur d'acquérir, de façon sûre, ladite synchronisation de trame, mais permettant, grâce en outre à une connaissance de ladite synchronisation de trame acquise préalablement, dans ledit premier mode, de déterminer une perte de synchronisation de trame.

11. Dispositif selon la revendication 10, comportant :
- des moyens pour signaler audit premier équipement émetteur une perte de synchronisation de trame dudit premier équipement récepteur, par passage d'un deuxième équipement émetteur (15), associé, dans un même équipement de transmission (14), audit premier équipement récepteur (2), dudit deuxième mode de transmission vers ledit premier mode de transmission, et des moyens pour détecter ce changement de mode de transmission dans un deuxième équipement récepteur (16), associé, dans un même équipement de transmission (13), audit premier équipement émetteur (1).

12. Dispositif selon la revendication 11, comportant :
- des moyens (18) pour transmettre, dans ledit deuxième mode, des trames dites modifiées ne comportant aucune séquence de données utiles imitant le motif de synchronisation (F1) du premier mode, dites aussi séquences interdites (X1, X2), celles-ci étant remplacées par des données dites de substitution (S0, S1, S2) destinées à permettre, en réception,de pouvoir réinsérer ces séquences interdites parmi les données utiles reçues.

13. Dispositif selon l'une des revendications 11 ou 12, **caractérisé en ce que**:
- ledit premier équipement émetteur (1) comporte des moyens (3) pour émettre des trames selon ledit premier mode, des moyens (4) pour émettre des trames selon ledit deuxième mode, et des moyens (5) de sélection de mode en émission pour sélectionner, suivant le cas, l'un ou l'autre de ces moyens,
- ledit premier équipement récepteur comporte des moyens (6) de détection de synchronisation de trame de premier mode, des moyens (7) de détection de perte de synchronisation de trame de deuxième mode, et des moyens (8) de sélection de mode en réception pour sélectionner, suivant le cas, l'un ou l'autre de ces moyens,
- ledit deuxième équipement émetteur (15) comporte des moyens (17) pour émettre des trames selon ledit premier mode, des moyens (18) pour émettre des trames selon ledit deuxième mode, et des moyens (19) de sélection de mode en émission pour sélectionner, suivant le cas, l'un ou l'autre de ces moyens,
- ledit deuxième équipement récepteur (16) comporte des moyens (20) de détection de changement de mode, du deuxième mode vers le premier mode.

14. Dispositif selon la revendication 13, **caractérisé en ce que** lesdits moyens de détection de perte de synchronisation de trame de deuxième mode comportent des moyens dits simplifiés (9) de détection de synchronisation, activés par une horloge-trame (10) elle-même calée sur une position fonction de ladite connaissance préalablement acquise de la synchronisation de trame.

15. Dispositif selon l'une des revendications 12 à 14, **caractérisé en ce qu'**il comporte, pour l'élaboration de trames modifiées à partir d'un train incident de données utiles :
- des moyens de calcul de données de substitution à partir de données utiles incidentes,
- des moyens d'émission de données utiles ne comportant aucune séquence interdite, et de données de substitution ainsi calculées, pour formation desdites trames.

16. Dispositif selon l'une des revendications 12 à 15, **caractérisé en ce qu'**il comporte, pour l'extraction d'un train de données utiles à partir de trames modifiées :
- des moyens d'analyse de données de substitution de trames incidentes,
- des moyens d'insertion de séquences interdites, parmi les données utiles extraites desdites trames incidentes, aux emplacements obtenus par analyse desdites données de substitution, de manière à former ledit train de données utiles.

17. Trame modifiée pour la transmission de données dans ledit deuxième mode, selon l'une des revendications 3 à 9, **caractérisée en ce qu'**elle ne comporte aucune séquence de données utiles imitant le motif de synchronisation (F1) d'un premier mode selon l'une des revendications 3 à 9, dites aussi séquences interdites (X1, X2), celles-ci étant remplacées par des données dites de substitution (S0, S1, S2) destinées à permettre, en réception, de pouvoir réinsérer ces séquences interdites parmi les données utiles reçues.

18. Trame selon la revendication 17, **caractérisée en ce que** lesdites données de substitution comportent elles-mêmes deux types de données:
- des données dites d'exploitation (S0, S10, S20), permettant, en réception, de déterminer dans quelle mesure des séquences interdites sont présentes dans la séquence de données utiles à transmettre,
- des données dites d'adresse (A1, A2), permettant, en réception, de déterminer plus précisément le ou les emplacements où une séquence interdite doit être insérée parmi les données utiles reçues.

19. Trame selon la revendication 18, **caractérisée en ce que** lesdites données de substitution comportent:
- des premières données d'exploitation (S0), indiquant si la séquence de données utiles à transmettre contient ou non des séquences interdites, et,
- une séquence de substitution (S1, S2) se substituant à chaque séquence interdite (X1, X2) et contenant elle-même d'une part l'adresse (A1, A2) où insérer cette séquence interdite, et d'autre part des deuxièmes données d'exploitation (S10, S20) indiquant si cette séquence de substitution est ou non la dernière de la trame transmise.

20. Trame selon la revendication 19, **caractérisée en ce que** lesdites séquences de substitution comportent en outre:
- des données (P) de protection de ces séquences de substitution contre les erreurs de transmission.

21. Trame selon l'une des revendications 19 ou 20, **caractérisée en ce que** lesdites séquences de substitution comportent en outre:
- des données dites de verrouillage (V), destinées à éviter qu'une séquence interdite soit reproduite par introduction d'une séquence de substitution dans la trame transmise.

22. Trame selon l'une des revendications 19, 20 et 21, **caractérisée en ce que** la première séquence de substitution (S1) est transmise après lesdites premières données d'exploitation (S0), elles-mêmes transmises après le motif de synchronisation (F2), et **en ce que** la n ième séquence de substitution (S2) est transmise à la place de la n-1 ième séquence interdite (X1).

23. Trame selon l'une des revendications 19, 20 et 21, **caractérisée en ce que**:
- lesdites premières données d'exploitation (S0) sont insérées non pas après le motif de synchronisation de la trame considérée, mais avant le motif de synchronisation de la trame suivante,
- lesdites deuxièmes données d'exploitation (S10, S20) n'indiquent pas si la séquence de substitution correspondante est ou non la dernière à partir du début de la trame, mais si elle est ou non la dernière à partir de la fin de la trame.

24. Trame selon la revendication 23, **caractérisée en ce que** la dernière séquence de substitution (S2) est transmise avant lesdites premières données d'exploitation (S0), elles-mêmes tranmises avant le motif de synchronisation de la trame suivante, et **en ce que** la n-1 ième séquence de substitution (S1) est transmise à la place de la n ième séquence substituée (X2).

25. Trame selon l'une des revendications 17 à 21, **caractérisée en ce que** lesdites données de substitution (S0, S1, S2) sont toutes transmises avant lesdites données utiles (D1, D2, D3).

## Claims

1. A method of transmitting data frames including payload data and auxiliary data enabling frame synchronization of a receiver to a transmitter, said method being **characterized in that**:
- it has two transmission modes:
-- a first mode used on initialization or in the event of loss of frame synchronization of a receiver (2) referred to as a first receiver whereby a transmitter (1) referred to as a first transmitter sends to said first receiver frames including sufficient auxiliary data to enable said first receiver to acquire said frame synchronization in a reliable fashion, said auxiliary data including a synchronization pattern,
-- a second mode used otherwise whereby said first transmitter sends frames including insufficient auxiliary data to enable said first receiver to acquire said frame synchronization in a reliable fashion but, by virtue also of knowledge of said frame synchronization acquired previously, in said first mode, enabling loss of frame synchronization to be determined.

2. A method according to claim 1, in which:
- loss of frame synchronization of said first receiver is signaled to said first transmitter by a second transmitter (15) associated with said first receiver (2) in a common transmission equipment (14) changing from said second transmission mode to said first transmission mode and detection of said change of transmission mode by a second receiver (16) associated with said first transmitter (1) in the same transmission equipment (13).

3. A method according to claim 2, in which:
- said second transmitter transmits modified frames in said second mode including no payload data sequence imitating the synchronization pattern (F1) of the first mode, also referred to as illegal sequences (X1, X2), which are replaced by substitution data (S0, S1, S2) enabling the receiver to insert said illegal sequences into the received payload data.

4. A method according to any one of claims 1 to 3 **characterized in that** the auxiliary data of frames transmitted in said first mode include a synchronization pattern (F1) and synchronization bits (f1, f2, ..., fn) inserted in the payload data to be transmitted and intended to prevent imitation of said synchronization pattern within said payload data.

5. A method according to any one of claims 1 to 3 **characterized in that** the auxiliary data of frames transmitted in said second mode includes only one synchronization pattern (F2) with a different length to the synchronization pattern of frames transmitted in the first mode.

6. A method according to any one of claims 1 to 3 **characterized in that** the auxiliary data of frames transmitted in said second mode include only error correcting code data (C) obtained by applying an error correcting code of the block code type to the payload data to be transmitted in said frames.

7. A method according to any one of claims 3 to 6 **characterized in that** it includes, for producing modified frames from an incoming payload data stream, steps of:
- calculating substitution data from incoming payload data, and
- sending payload data not including any illegal sequence and substitution data calculated in the above manner for forming said frames.

8. A method according to claim 7 **characterized in that** said calculation of substitution data necessitates an analysis of said incoming payload data over a sufficient length to enable calculation of all the substitution data of a frame before the first payload bit of that frame is sent.

9. A method according to claim 7 **characterized in that** said calculation of substitution data necessitates an analysis of said incoming payload data over a length less than that necessary to enable calculation of all the substitution data of a frame before sending the first payload bit of that frame.

10. A device for transmitting data frames including payload data and auxiliary data enabling frame synchronization of a receiver to a transmitter, said device being **characterized in that** it comprises:
- means for transmitting in a first mode used on initialization or in the event of loss of frame synchronization of a receiver (2) referred to as a first receiver whereby a transmitter (1) referred to as a first transmitter sends to said first receiver frames including sufficient auxiliary data to enable said first receiver (2) to acquire said frame synchronization in a reliable fashion,
- means for transmitting in a second mode used otherwise whereby said first transmitter sends frames including insufficient auxiliary data to enable said first receiver to acquire said frame synchronization in a reliable fashion but, by virtue also of a knowledge of said frame synchronization acquired previously, in said first mode, enabling loss of frame synchronization to be determined.

11. A device according to claim 10, further comprising:
- means for signaling to said first transmitter loss of frame synchronization of said first receiver by a second transmitter (15) associated with said first receiver (2) in the same transmission equipment (14) changing from said second mode of transmission to said first mode of transmission and means for detecting said change of transmission mode in a second receiver (16) associated with said first transmitter (1) in the same transmission equipment (13).

12. A device according to claim 11, further comprising:
- means (18) for transmitting in said second mode modified frames including no payload data sequence imitating the synchronization pattern (F1) of the first mode, also referred to as illegal sequences (X1, X2), which are replaced by substitution data (S0, S1, S2) enabling said illegal sequences to be inserted into the received payload data at the receiver.

13. A device according to claim 11 or 12 **characterized in that**:
- said first transmitter (1) includes means (3) for sending frames in said first mode, means (4) for sending frames in said second mode and sending mode selector means (5) for selecting one or other of said means, as appropriate,
- said first receiver includes first mode frame synchronization detector means (6), second mode frame synchronization loss detector means (7) and receive mode selector means (8) for selecting one or other of said means, as appropriate,
- said second transmitter (15) includes means (17) for sending frames in said first mode, means (18) for sending frames in said second mode and sending mode selector means (19) for selecting one or other of said means, as appropriate, and
- said second receiver (16) includes means (20) for detecting a change from said second mode to said first mode.

14. A device according to claim 13 **characterized in that** said second mode frame synchronization loss detector means include simplified synchronization detection means (9) activated by a frame clock (10) locked onto a position depending on said previously acquired knowledge of frame synchronization.

15. A device according to any one of claims 12 to 14 **characterized in that** it includes, for producing modified frames from an incoming payload data stream:
- means for calculating substitution data from incoming payload data, and
- means for sending payload data containing no illegal sequence and substitution data calculated in the above manner to form said frames.

16. A device according to any one of claims 12 to 15 **characterized in that** it includes, for extracting a payload data stream from the modified frames:
- means for analyzing incoming frame substitution data, and
- means for inserting illegal sequences into the payload data extracted from said incoming frames at locations obtained by analyzing said substitution data to form said payload data stream.

17. A modified frame for transmitting data in a second mode according to any one of claims 3 to 9 **characterized in that** it does not include any payload data sequence imitating the synchronization pattern (F1) of a first mode according to any one of claims 3 to 9, also referred to as illegal sequences (X1, X2), which are replaced by substitution data (S0, S1, S2) to enable said illegal sequences to be inserted into the received payload data at the receiver.

18. A frame according to claim 17 **characterized in that** said substitution data includes data of two types:
- operating data (A1, A2) enabling the degree to which illegal sequences are present in the payload data sequence to be transmitted at the receiver to be determined, and
- address data enabling more precise determination of the location or locations at which an illegal sequence must be inserted into the receive payload data at the receiver.

19. A frame according to claim 18 **characterized in that** said substitution data includes:
- first operating data (S0) indicating if the payload data sequence to be transmitted contains illegal sequences or not, and
- a substitution sequence (S1, S2) substituted for each illegal sequence (X1, X2) and containing the address (A1, A2) at which to insert said illegal sequence and second operating data (S10, S20) indicating if said substitution sequence is the last of the transmitted frame or not.

20. A frame according to claim 19 **characterized in that** said substitution sequences further include:
- data (P) to protect said substitution sequences against transmission errors.

21. A frame according to claim 19 or claim 20 **characterized in that** said substitution sequences further include:
- locking data (V) to prevent an illegal sequence being reproduced by inserting a substitution sequence into the frame transmitted.

22. A frame according to any one of claims 19, 20 or 21 **characterized in that** the first substitution sequence (S1) is transmitted after said first operating data (S0) which is transmitted after the synchronization pattern (F2) and **in that** the nth substitution sequence (S2) is transmitted instead of the (n-1)th illegal sequence (X1).

23. A frame according to any one of claims 19, 20 or 21 **characterized in that**:
- said first operating data (S0) is not inserted after the synchronization pattern of the frame concerned but before the synchronization pattern of the next frame, and
- said second operating data (S10, S20) does not indicate if the corresponding substitution sequence is the last from the beginning of the frame or not but instead if it is the last from the end of the frame or not.

24. A frame according to claim 23 **characterized in that** the last substitution sequence (S2) is transmitted before said first operating data (S0) which is transmitted before the synchronization pattern of the next frame and **in that** the (n-1)th substitution sequence (S1) is transmitted instead of nth substituted sequence (X2).

25. A frame according to any one of claims 17 to 21 **characterized in that** said substitution data (S0, S1, S2) is all transmitted before said payload data (D1, D2, D3).

## Patentansprüche

1. Verfahren zur Übertragung von Datenrahmen, welche einerseits Nutzdaten und andererseits Hilfsdaten beinhalten, die eine Rahmensynchronisation eines Empfangsgerätes auf ein Sendegerät ermöglichen sollen, wobei dieses Verfahren **dadurch gekennzeichnet ist, daß** es
- zwei mögliche Übertragungsmodi beinhaltet, nämlich
-- einen ersten Modus, der bei der Initialisierung oder im Fall eines Verlustes der Rahmensynchronisation eines Empfangsgeräts (2), welches als erstes Empfangsgerät bezeichnet wird, verwendet wird, und bei welchem ein als erstes Sendegerät bezeichnetes Sendegerät (1) in Richtung auf dieses erste Empfangsgerät Rahmen aussendet, die genügend Hilfsdaten enthalten, um es diesem ersten Empfangsgerät zu ermöglichen, auf sichere Weise die besagte Rahmensynchronisation zu erreichen, wobei diese Hilfsdaten insbesondere ein Synchronisationsmuster beinhalten, und
-- einen zweiten Modus, der bei Nichtvorliegen eines dieser beiden Fälle verwendet wird, und bei welchem das besagte erste Sendegerät Rahmen aussendet, die nicht genügend Hilfsdaten enthalten, um es dem besagten ersten Empfangsgerät zu ermöglichen, auf sichere Weise die besagte Rahmensynchronisation zu erreichen, es aber andererseits aufgrund der Kenntnis der zuvor im besagten ersten Modus erreichten besagten Rahmensynchronisation gestattet, einen Verlust der Rahmensynchronisation zu erkennen.

2. Verfahren gemäß Anspruch 1, in welchem ein Verlust der Rahmensynchronisation durch das besagte erste Empfangsgerät dem besagten ersten Sendegerät durch Umschaltung eines zweiten Sendegeräts (15), das in derselben Übertragungsanlage (14) dem besagten ersten Empfangsgerät (2) zugeordnet ist, vom besagten zweiten Übertragungsmodus auf den besagten ersten Übertragungsmodus und Erkennung dieser Änderung im Übertragungsmodus durch ein zweites Empfangsgerät (16) signalisiert wird, das in derselben Übertragungsanlage (13) dem besagten ersten Sendegerät (1) zugeordnet ist.

3. Verfahren gemäß Anspruch 2, in welchem das besagte zweite Sendegerät im besagten zweiten Modus Rahmen aussendet, die als modifizierte Rahmen bezeichnet werden und keine Nutzdatensequenz enthalten, welche das Synchronisationsmuster (F1) des ersten Modus' imitieren und auch als verbotene Sequenzen (X1, X2) bezeichnet werden, wobei diese durch als Substitutionsdaten (S0, S1, S2) bezeichnete Daten ersetzt werden, die dazu dienen, beim Empfang diese verbotenen Sequenzen wieder in die empfangenen Nutzdaten einfügen zu können.

4. Verfahren gemäß einem oder mehreren der Ansprüche 1 bis 3, **dadurch gekennzeichnet, daß** die Hilfsdaten der im besagten ersten Modus übertragenen Rahmen ein Synchronisationsmuster (F1) sowie Synchronisationsbits (f1, f2, ...fn) beinhalten, die in die zu übertragenden Nutzdaten eingefügt werden und dazu dienen, eine Imitation dieses Synchronisationsmusters in diesen Nutzdaten zu vermeiden.

5. Verfahren gemäß einem oder mehreren der Ansprüche 1 bis 3, **dadurch gekennzeichnet, daß** die Hilfsdaten der im besagten zweiten Modus übertragenen Rahmen nur ein Synchronisationsmuster (F2) beinhalten, das eine andere Länge als das Synchronisationsmuster der im ersten Modus übertragenen Rahmen aufweist.

6. Verfahren gemäß einem oder mehreren der Ansprüche 1 bis 3, **dadurch gekennzeichnet, daß** die Hilfsdaten der im ersten Modus übertragenen Rahmen nur Fehlerkorrektur-Kodierungsdaten (C) beinhalten, die erzeugt werden, indem ein Fehlerkorrekturcode vom Blocktyp auf die in diesen Rahmen zu übertragenden Nutzdaten angewandt wird.

7. Verfahren gemäß einem oder mehreren der Ansprüche 3 bis 6, **dadurch gekennzeichnet, daß** es zur Aufbereitung von modifizierten Rahmen aus einem ankommenden Strom von Nutzdaten die Schritte beinhaltet,
- eine Berechnung von Substitutionsdaten aus ankommenden Nutzdaten sowie
- das Aussenden von Nutzdaten, die keine verbotene Sequenz beinhalten, und von so berechneten Substitutionsdaten zur Bildung der besagten Rahmen durchzuführen.

8. Verfahren gemäß Anspruch 7, **dadurch gekennzeichnet, daß** die besagte Berechnung von Substitutionsdaten eine Analyse der besagten ankommenden Nutzdaten über eine Länge erfordert, die groß genug ist, um alle Substitutionsdaten eines Rahmens vor dem Aussenden des ersten Nutzbits dieses Rahmens berechnen zu können.

9. Verfahren gemäß Anspruch 7, **dadurch gekennzeichnet, daß** die besagte Berechnung von Substitutionsdaten eine Analyse der besagten ankommenden Nutzdaten über eine Länge erfordert, die geringer ist als diejenige, die erforderlich ist, um alle Substitutionsdaten eines Rahmens vor dem Aussenden des ersten Nutzbits dieses Rahmens berechnen zu können.

10. Vorrichtung zur Übertragung von Datenrahmen, wobei diese Rahmen Nutzdaten und Hilfsdaten beinhalten, die dazu dienen, eine Rahmensynchronisation eines Empfangsgeräts auf ein Sendegerät zu ermöglichen, und wobei dieses Empfangsgerät **dadurch gekennzeichnet ist, daß** es folgendes beinhaltet:
- Vorrichtungen zur Durchführung einer Übertragung in einem ersten Modus, der entweder bei der Initialisierung oder im Fall eines Verlustes der Rahmensynchronisation eines Empfangsgeräts (2), welches als erstes Empfangsgerät bezeichnet wird, verwendet wird, und bei welchem ein als erstes Sendegerät bezeichnetes Sendegerät (1) in Richtung auf dieses erste Empfangsgerät Rahmen aussendet, die genügend Hilfsdaten enthalten, um es diesem ersten Empfangsgerät (2) zu ermöglichen, auf sichere Weise die besagte Rahmensynchronisation zu erreichen,
- Vorrichtungen zur Durchführung einer Übertragung in einem zweiten Modus, der bei Nichtvorliegen eines dieser beiden Fälle verwendet wird, und bei welchem das besagte erste Sendegerät Rahmen aussendet, die nicht genügend Hilfsdaten enthalten, um es dem besagten ersten Empfangsgerät zu ermöglichen, auf sichere Weise die besagte Rahmensynchronisation zu erreichen, es aber andererseits aufgrund der Kenntnis der zuvor im besagten ersten Modus erreichten besagten Rahmensynchronisation gestattet, einen Verlust der Rahmensynchronisation zu erkennen.

11. Vorrichtung gemäß Anspruch 10, beinhaltend
- Vorrichtungen, die dem besagten ersten Sendegerät einen Verlust der Rahmensynchronisation des besagten ersten Empfangsgerätes durch Umschaltung eines zweiten Sendegeräts (15), das in derselben Übertragungsanlage (14) dem besagten ersten Empfangsgerät (2) zugeordnet ist, vom besagten zweiten Übertragungsmodus auf den besagten ersten Übertragungsmodus signalisieren, sowie Vorrichtungen zur Erkennung dieser Änderung im Übertragungsmodus in einem zweiten Empfangsgerät (16), das in derselben Übertragungsanlage (13) dem besagten ersten Sendegerät (1) zugeordnet ist.

12. Vorrichtung gemäß Anspruch 11, beinhaltend
- Vorrichtungen (18) zum Übertragen von Rahmen im besagten zweiten Modus, welche als modifizierte Rahmen bezeichnet werden und keine Nutzdatensequenz enthalten, die das Synchronisationsmuster (F1) des ersten Modus' imitiert und auch als verbotene Sequenzen (X1, X2) bezeichnet werden, wobei diese durch als Substitutionsdaten bezeichnete Daten (S0, S1, S2) ersetzt werden, die dazu dienen, diese verbotenen Sequenzen beim Empfang wieder in die empfangenen Nutzdaten einfügen zu können.

13. Vorrichtung gemäß einem oder beiden Ansprüchen 11 oder 12, **dadurch gekennzeichnet, daß**
- das besagte erste Sendegerät (1) Vorrichtungen (3) zum Aussenden von Rahmen im besagten ersten Modus, Vorrichtungen (4) zum Aussenden von Rahmen im besagten zweiten Modus und Moduswahlvorrichtungen (5) beinhaltet, die beim Senden je nach Betriebszustand zum Auswählen der einen oder anderen Gruppe dieser Vorrichtungen dienen, ferner dadurch, daß
- das besagte erste Empfangsgerät Vorrichtungen (6) zur Erkennung der Rahmensynchronisation im ersten Modus, Vorrichtungen (7) zur Erkennung des Verlustes der Rahmensynchronisation im zweiten Modus und Vorrichtungen (8) beinhaltet, die beim Empfang je nach Betriebszustand zum Auswählen der einen oder anderen Gruppe dieser Vorrichtungen dienen, sowie dadurch, daß
- das besagte zweite Sendegerät (15) Vorrichtungen (17) zum Aussenden von Rahmen im besagten ersten Modus, Vorrichtungen (18) zum Aussenden von Rahmen im besagten zweiten Modus und Vorrichtungen (19) beinhaltet, die beim Senden je nach Betriebszustand zum Auswählen der einen oder anderen Gruppe dieser Vorrichtungen dienen,
- und das besagte zweite Empfangsgerät (16) Vorrichtungen (20) zur Erkennung der Moduswechsels vom zweiten zum ersten Modus beinhaltet.

14. Vorrichtung gemäß Anspruch 13, **dadurch gekennzeichnet, daß** die besagten Vorrichtungen zur Erkennung eines Verlustes der Rahmensynchronisation im zweiten Modus Vorrichtungen beinhalten, die als vereinfachte Vorrichtungen zur Rahmensynchronisationserkennung (9) bezeichnet werden und durch einen Taktrahmen (10) aktiviert werden, der seinerseits auf eine Position fixiert wird, die von einer zuvor erlangten Kenntnis der besagten Rahmensynchronisation abhängt.

15. Vorrichtung gemäß einem oder mehreren der Ansprüche 12 bis 14, **dadurch gekennzeichnet, daß** diese zur Aufbereitung von modifizierten Rahmen aus einem ankommenden Strom von Nutzdaten folgendes beinhaltet:
- Vorrichtungen zur Berechnung von Substitutionsdaten aus ankommenden Nutzdaten sowie
- Vorrichtungen zum Aussenden von Nutzdaten, die keine verbotenen Sequenzen beinhalten, und von so berechneten Substitutionsdaten zur Bildung der besagten Rahmen.

16. Vorrichtung gemäß einem oder mehreren der Ansprüche 12 bis 15, **dadurch gekennzeichnet, daß** diese zur Extraktion eines Nutzdatenstromes aus modifizierten Rahmen folgendes beinhaltet:
- Vorrichtungen zur Analyse von Substitutionsdaten ankommender Rahmen sowie
- Vorrichtungen zum Einfügen von verbotenen Sequenzen in die aus den besagten ankommenden Rahmen extrahierten Nutzdaten an Positionen, die durch Analyse der besagten Substitutionsdaten ermittelt wurden, zur Bildung des besagten Nutzdatenstromes.

17. Modifizierter Datenrahmen für die Übertragung von Daten in einem zweiten Modus gemäß einem oder mehreren der Ansprüche 3 bis 9, **dadurch gekennzeichnet, daß** dieser keine Datensequenz beinhaltet, die das Synchronisationsmuster (F1) eines ersten Modus' gemäß einem oder mehreren der Ansprüche 3 bis 9 imitiert, wobei diese auch als verbotene Sequenzen (X1, X2) bezeichnet und durch als Substitutionsdaten (S0 S1, S2) bezeichnete Daten ersetzt werden, die dazu dienen, beim Empfang diese verbotenen Sequenzen wieder in die empfangenen Nutzdaten einfügen zu können.

18. Rahmen gemäß Anspruch 17, **dadurch gekennzeichnet, daß** die besagten Substitutionsdaten ihrerseits zwei Arten von Daten beinhalten, nämlich
- Betriebsdaten (S0, S10, S20), die es beim Empfang festzustellen ermöglichen, in welchem Maße verbotene Sequenzen in der zu übertragenden Nutzdatensequenz enthalten sind, und
- Daten, die als Adressendaten (A1, A2) bezeichnet werden und es beim Empfang ermöglichen, die Position oder Positionen genauer zu ermitteln, an welcher bzw. an welchen eine verbotene Sequenz in die empfangenen Nutzdaten einzufügen ist.

19. Rahmen gemäß Anspruch 18, **dadurch gekennzeichnet, daß** die besagten Substitutionsdaten folgendes beinhalten:
- Erste Betriebsdaten (S0), die angeben, ob die zu übertragende Nutzdatensequenz verbotene Sequenzen enthält oder nicht, und
- eine Substitutionssequenz (S1, S2), die an die Stelle der einzelnen verbotenen Sequenzen (X1, X2) tritt und ihrerseits zum einen die Adresse (A1, A2), an welcher diese verbotene Sequenz einzufügen ist, und zum anderen zweite Betriebsdaten (S10, S20) enthält, die angeben, ob diese Substitutionssequenz die letzte des übertragenen Rahmens ist oder nicht.

20. Rahmen gemäß Anspruch 19, **dadurch gekennzeichnet, daß** die besagten Substitutionssequenzen außerdem folgendes beinhalten:
- Rahmen (P) zur Absicherung dieser Substitutionssequenz gegen Übertragungsfehler.

21. Rahmen gemäß einem oder beiden der Ansprüche 19 oder 20, **dadurch gekennzeichnet, daß** die besagten Substitutionssequenzen außerdem folgendes beinhalten:
- Daten, die als Blockierungsdaten (V) bezeichnet werden und verhindern sollen, daß eine verbotene Sequenz durch die Einfügung einer Substitutionssequenz in den übertragenen Rahmen reproduziert wird.

22. Rahmen gemäß einem oder mehreren der Ansprüche 19, 20 und 21, **dadurch gekennzeichnet, daß** die erste Substitutionssequenz (S1) nach den besagten ersten Betriebsdaten (S0) übertragen wird, die ihrerseits nach dem Synchronisationsmuster (F2) übertragen werden, sowie dadurch, daß die n-te Substitutionssequenz (S2) an die Position der (n-1)-ten verbotenen Sequenz (X1) übertragen wird.

23. Rahmen gemäß einem oder mehreren der Ansprüche 19, 20 und 21, **dadurch gekennzeichnet, daß**
- die besagten ersten Betriebsdaten (S0) nicht nach dem Synchronisationsmuster des betrachteten Rahmens übertragen werden, sondern vor dem Synchronisationsmuster des folgenden Rahmens, sowie dadurch, daß
- die besagten zweiten Betriebsdaten (S10, S20) nicht angeben, ob die zugehörige Substitutionssequenz die letzte seit Beginn des Rahmens ist oder nicht, sondern ob sie die letzte seit Ende des Rahmens ist oder nicht.

24. Rahmen gemäß Anspruch 23, **dadurch gekennzeichnet, daß** die letzte Substitutionssequenz (S2) vor den besagten ersten Betriebsdaten (S0) übertragen wird, die ihrerseits vor dem Synchronisationsmuster des folgenden Rahmens übertragen werden, sowie dadurch, daß die (n-1)-te Substitutionssequenz (S1) an die Position der n-ten substituierten Sequenz (X2) übertragen wird.

25. Rahmen gemäß einem oder mehreren der Ansprüche 17 bis 21, **dadurch gekennzeichnet, daß** die besagten Substitutionssequenzen (S0, S1, S2) vor den besagten Nutzdaten (D1, D2, D3) übertragen werden.
